# EUROPEAN PATENT SPECIFICATION

(11) **EP 4 491 505 B1**
(45) Date of publication and mention of the grant of the patent: **22.04.2026**
(21) Application number: 23184576.9
(22) Date of filing: 11.07.2023
(51) Int. Cl.: B64C 1/14

(54) **COMPOSITE AIRCRAFT DOOR AND METHOD FOR MANUFACTURING THE SAME**
FLUGZEUGVERBUNDTÜR UND VERFAHREN ZUR HERSTELLUNG DAVON
PORTE D'AÉRONEF COMPOSITE ET SON PROCÉDÉ DE FABRICATION

(43) Date of publication of application: 15.01.2025
(73) Proprietor: Airbus Operations GmbH, 21129 Hamburg (DE)
(72) Inventor: Jörn, Paul, 21129 Hamburg (DE); Vichniakov, Alexei, 21129 Hamburg (DE); Hinz, Remo, 21129 Hamburg (DE); Hanske, Claus, 21129 Hamburg (DE); Köhler, Filipp, 21129 Hamburg (DE); Finger, Lennart, 21129 Hamburg (DE); Abdul, Samir, 21129 Hamburg (DE); Gushurst, Nadine, 21129 Hamburg (DE); Hernandez Clemente, Oscar Luis, 21129 Hamburg (DE)
(74) Representative: Schornack, Oliver

(56) References cited:
- US-A- 4 908 254
- US-A1- 2017 291 679
- US-A1- 2022 153 401
- US-B2- 11 692 389

## Description

The present disclosure generally relates to a composite aircraft door and a method manufacturing the same. Particularly, the present disclosure relates to a composite aircraft door having an outer skin with attached blades and an inner skin with attached blades, wherein the inner and outer blades are attached to one another to form the composite aircraft door. Furthermore, the present disclosure relates to a method of manufacturing such composite door including preparing the outer skin having outer blades attached thereto and the inner skin having inner blades attached thereto, and attaching the blades to one another.

A conventional aircraft door is made from metal, such as aluminium, due to the required stiffness. Although an increasing number of components of an aircraft, including the outer skin and frames, are made from plastic composite materials, such as thermoset materials, the doors are still made from metal. The reason for this is, amongst others, that the door is equipped with doorstops door mounts to hold the door, so that a high load is introduced into the door structure in a small area of the door. In addition, the required web structure to stiffen the door is quite complex, so that it can be easier manufactured from metal web parts.

However, metal is not only more expensive than other materials used in aircraft manufacturing, but also introduces a higher weight to the aircraft.

It is therefore an object of the present disclosure to provide an aircraft door that can be manufactured easier and more cost-effective. US 4908254 A describes a component for cladding apertures in the fuselage of an aircraft is to be of lighter weight and more corrosion resistant as compared with known claddings. The component is manufactured of carbon fibre reinforced curable synthetic resin and comprises a base layer onto which U-profiles and L-profiles are placed in spaced apart interrelationship, which during the manufacture are held in place by a grid comprising angular bridge members. A vacuum foil is applied over this assembly and is adhesively bonded along the edges of the base layer to the supporting surface. The space between the vacuum foil and the supporting surface is evacuated and curing proceeds at an elevated temperature and pressure. After complete curing the vacuum foils and the grid are removed. US 11692389 B2 describes a composite door comprising a composite frame, which comprises a first rail, a second rail, and crossbeams, joining the first rail and the second rail. The composite door also comprises a first composite side beam, a second composite side beam, and a composite skin, connected to each of the crossbeams of the composite frame, to the first composite side beam, and to the second composite side beam. The composite door further comprises first composite edge fittings, each connected to a corresponding one of the crossbeams of the composite frame, to the first composite side beam, and to the composite skin, and second composite edge fittings, each connected to a corresponding one of the crossbeams of the composite frame, to the second composite side beam, and to the composite skin.

### SUMMARY OF THE CLAIMED INVENTION

This object is solved by the present invention as defined in the independent claims. Preferred embodiments are defined by the dependent claims.

### SUMMARY OF THE DISCLOSURE

According to a first aspect to better understand the present disclosure, a door for an aircraft comprises an outer skin, a plurality of outer blades extending from the outer skin at a predefined angle, a plurality of inner blades, and an inner skin extending from the plurality of inner blades, wherein the inner skin comprises a plurality of sections, each extending at a predefined angle from one of the plurality of inner blades. The outer skin, the plurality of outer blades, the plurality of inner blades, and the inner skin are made from a composite plastic material. Moreover, each of the plurality of inner blades is attached to one of the plurality of outer blades.

Thus, the arrangement of outer skin and outer blades at a predefined angle on the one hand, and inner skin sections and inner blades arranged at a predefined angle on the other hand, provides for a very stiff structure, wherein the inner blades and outer blades, attached to one another, form together a structure extending at the predefined angle from the outer skin, which provides rigidity to the outer skin, such as frames or stringers in conventional aircraft manufacturing. In addition, the inner skin sections arranged and extending from the inner blades at a predefined angle form flange-like structures extending from the "frames or stringers" formed by the blades. Thus, the inner skin contributes to the overall stiffness of the door structure.

The predefined angle between the outer skin and each outer blade can be the same angle or a similar angle as the predefined angle between the inner skin and each inner blade. Thus, the outer skin and the inner skin can be arranged parallel to one another.

Specifically, the predefined angle can form a substantially orthogonal arrangement between the respective components. In other words, the plurality of outer blades can extend from the outer skin substantially orthogonal, and the inner blades can extend from the inner skin substantially orthogonal. Thus, a predefined angle and eventually orthogonal can be used interchangeably.

In the present disclosure "substantially orthogonal" is to be understood as two components that are arranged perpendicular to one another or at an angle with respect to one another that falls into a range above and below 90°. Thus, "substantially orthogonal" can mean to be at an angle of 90° +/- 20°, preferably +/- 15°, more preferably +/- 10°, and most preferably +/-5°.

Since all components are made of a composite plastic material, a lightweight structure can be provided, so that the overall weight of a door to the aircraft is reduced. In addition, composite plastic materials allow a fast and easy manufacturing of outer skin with attached blades and inner skin with attached blades. Specifically, due to the substantially orthogonal arrangement of the blades relative to the outer skin and inner skin, respectively, conventional composite plastic manufacturing techniques can be employed. In other words, the substantially orthogonal arrangement of the elements of the door avoid any undercut or void, which would require difficult moulding and de-moulding. Likewise, composite plastic materials can be attached to one another using conventional manners, such as welding and adhering.

The outer skin and inner skin can be manufactured using parts of the same mould, which provides the shape of the door, such as a membrane and/or membrane holder. Thus, any curvature required for the outer skin of the aircraft can be given to the outer skin of the door, so that the door closes a door opening in the outer skin of the aircraft in a flush manner. The inner skin will have the same overall shape and, particularly, curvature, so that the inner skin runs parallel to the outer skin.

Thus, manufacturing can be performed fast and in a cost-effective manner.

In an implementation variant, a first group of the plurality of outer blades extends in a first direction along the outer skin, and a second group of the plurality of outer blades extends, along the outer skin, in a second direction different from the first direction, and wherein, preferably, the first direction is substantially orthogonal to the second direction. For instance, the first group of outer blades can run, for example, along a longitudinal direction of the door (e.g., a vertical direction of the installed door), while the second group of outer blades can run along a transverse direction of the door (e.g., a horizontal direction of the installed door). The first and second directions being different, for example, the first direction can be substantially orthogonal to the second direction. Thus, the first and second groups of outer blades provide additional strength to the door.

In another implementation variant, the door can further comprise a window opening in the outer skin, wherein one of the plurality of inner blades is positioned adjacent to the window opening. The one inner blade can form a window frame.

In yet another implementation variant, the door can further comprise an upper door beam, wherein one of the plurality of outer blades is positioned adjacent to the upper door beam. The outer blade, hence, stiffens the outer skin, particularly, in a region where high are loads introduced by the upper door beam. The door beam is to be understood as a structural component that allows mounting the door to an aircraft structure, for example, including a hinge mounting portion. Thus, any load acting on the door (e.g., the weight of the door when opened, and/or the inner pressure of the cabin of the aircraft pressing the door to the outside during flights) is transferred via the door beam to the aircraft structure. The inner and outer blades guide the loads towards the upper door beam.

In a further implementation variant, the door can further comprise a gusset arranged to span and connect two sections of the inner skin. As the sections of the inner skin form flange-like elements, a gusset connecting two of such sections may further stiffen the entire door structure. Specifically, by connecting two sections of the inner skin, a continuous frame (in a cross-section of the door) can be achieved consisting of two blades (e.g., parallel and adjacent to one another), the outer skin between the two blades, the inner skin sections attached to the two blades and the gusset (closing the continuous (rectangular) web section.

Alternatively, the inner skin can be formed in a manner, that at least portions of two sections of the inner skin are connected to one another or are integrated with one another. In other words, a section of the inner skin extending from an inner blade extends from the inner blade to the adjacent blade, where it meets the other section of the inner skin, where both inner skin sections can be connected or form an integral inner skin. When viewing along the inner blade, the inner skin may form a flange followed by a portion of the inner skin connecting two adjacent blades, followed by a flange (not extending up to the adjacent blade), and so on.

In an implementation variant, at least one of the plurality of outer blades and the plurality of inner blades can comprise an opening. Thus, material can be saved, where it is not necessary. This allows further weight reduction of the door.

Alternatively, each of one of the plurality of outer blades and the corresponding inner blade connected to the one outer blade has an indentation, so that the indentations of the connected outer and inner blades together form an opening in the connected blade. The respective indentation can be formed at an edge of the respective blade, which edge is arranged where the outer blade and the corresponding inner plate are connected to one another.

According to a second aspect to better understand the present disclosure, an aircraft comprises at least one door of the first aspect or one of its variants and examples.

According to a third aspect to better understand the present disclosure, a method for manufacturing a composite plastic door for an aircraft comprises preparing, from a composite plastic material, an outer skin having a plurality of outer blades extending from the outer skin at a predefined angle, and preparing from a composite plastic material, an inner skin having a plurality of sections and a plurality of inner blades, each inner blade extending from one of the plurality of sections at a predefined angle. Due to the predefined angle arrangement of outer skin and outer blade as well as inner skin and inner blade, the manufacturing can be easy, as there is (almost) no undercut or void.

The method further comprises attaching each of the plurality of inner blades to one of the plurality of outer blades. By connecting the orthogonally arranged blades to one another, the inner and outer skin are arranged parallel to one another and the two blades form a frame-like component for the door (particularly for the outer skin), while the inner skin sections form flanges stiffening the web-like blades.

The manufacturing can be based on conventional composite plastic material handling techniques, so that the door can be manufactured easy and cost-effective.

In an implementation variant, the composite plastic material can be a thermoplastic material or a thermoplastic, fibre reinforced composite material, or any other thermoplastic matrix system can be employed. As a mere example, polyaryletherketone (PAEK) or polyetheretherketone (PEEK) or Polyphenylene-sulfide (PPS) can be employed. In case of fiber reinforcement, glass fibers and/or carbon fibers can be employed.

In addition, the attaching can be performed by thermoplastic welding. As mere examples, the blades can be attached to one another by heating, ultrasonic welding, resistance welding, conduction welding, in situ welding, infrared welding, induction welding, and/or can be bonded to one another, and/or can be attached to one another using bolting, riveting, or other fastener or the like.

In another implementation variant, the attaching can comprise arranging each of the plurality of inner blades relative to one of the plurality of outer blades to have a side face of the inner blade abutting a side face of the outer blade. Thus, the inner and outer blades overlap with side faces arranged next to one another. The abutting faces form welding surfaces. Thus, a thickness of the resulting frame or stiffener (web-like structure of the door) substantially corresponds to the sum of the thicknesses of the blades.

Alternatively, attaching can comprise arranging each of the plurality of inner blades relative to one of the plurality of outer blades to have a front face of the inner blade abutting a front face of the outer blade, wherein the abutting front faces form welding surfaces. Thus, the thickness of the resulting frame or stiffener (web-like structure of the door) substantially corresponds to the thickness of the blades.

It is to be understood that some of the blades may be attached to one another with respective side faces contacting one another, while other blades are attached to one another with respective front faces contacting one another.

In a further implementation variant, the preparing of the outer skin or the inner skin can comprise hydrostatic metal membrane manufacturing. This allows joining parts, such as the outer skin and the plurality of outer blades as well as the inner skin and the corresponding plurality of inner blades in a fast manner, for example, without an autoclave or other materials, such as vacuum bagging.

In another implementation variant, the preparing of the outer skin with blades and/or inner skin with blades may include preparing these sub-parts or intermediate parts of the door in a semi-cured state or as a prepreg or the like, while the attaching comprises solidifying and/or final curing of the materials.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates inner and outer parts of an aircraft door during a manufacturing process;
- Figure 2: schematically illustrates an aircraft door assembled and completed;
- Figures 3a, b: schematically illustrate a cross-section through an aircraft door during subsequent manufacturing steps;
- Figures 4a, b: schematically illustrate a side view of a blade during subsequent manufacturing steps;
- Figure 5: schematically illustrates an aircraft comprising a plurality of doors; and
- Figure 6: schematically illustrates a flow diagram representing a method of manufacturing an aircraft door.

In the following description, for purposes of explanation and not limitation, specific details are set forth in order to provide a thorough understanding of the present disclosure. It will be apparent to one skilled in the art that the present disclosure may be practiced in other implementations that depart from these specific details.

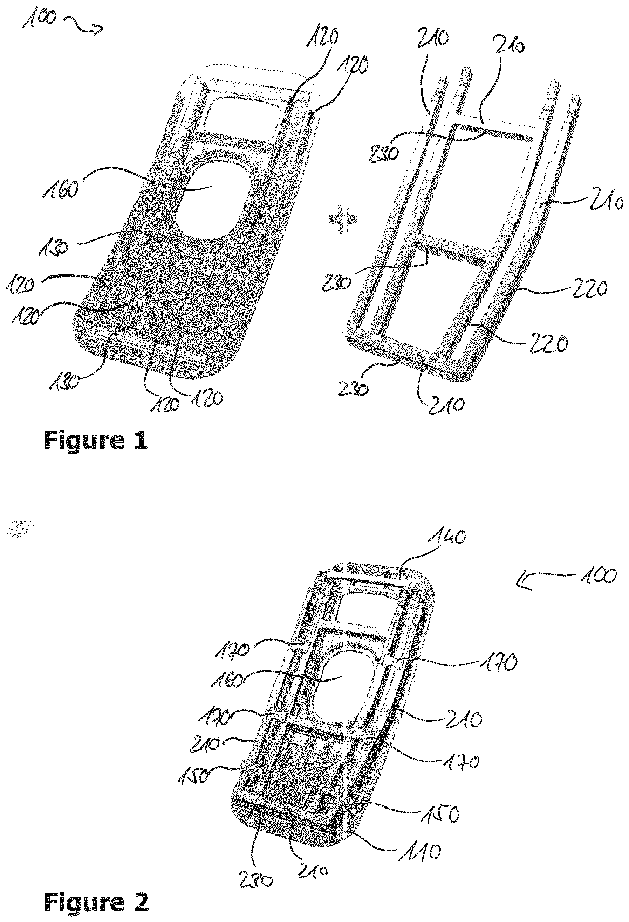

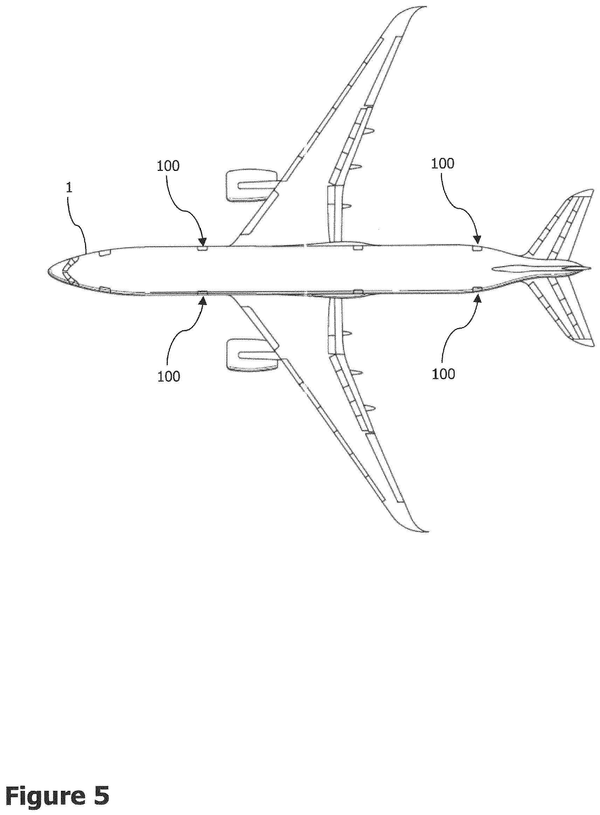

Figure 1 schematically illustrates inner and outer parts of an aircraft door 100 during a manufacturing process of such door 100. Specifically, the left part of Figure 1 shows an outer skin 110 having a plurality of blades 120, 130 attached thereto. The blades 120, 130 extend at a predefined angle from the outer skin 110, particularly with respect to a plane defined by the outer skin 110. Since the outer skin 110 comprises a curvature in at least one direction (due to the round shape of a fuselage of an aircraft 1 (Figure 5)), the plane defined by the outer skin 110 is to be understood as a plurality of planes tangentially arranged along the curvature. Thus, each of the at least one outer blade 120, 130 can also have a curvature in accordance with the outer skin 110. Each of a first group of the at least one outer blade 120 can run along a longitudinal direction of the door 100, such as a vertical direction of the door 100 when the door 100 is installed in the aircraft 1. A second group of the at least one outer blade 130 can run along a transverse direction (bits direction) of the door 100.

The outer skin 110 can further comprise a window opening 160 or similar through hole. As such opening 160 weakens the structure of the outer skin 110, at least one outer blade 130 is positioned adjacent to the window opening 160.

Likewise, an upper beam 140 (Figure 2) can later be arranged at the door 100, which focuses loads (a load transfer) between the door 100 and a structure, to which the door 100 is mounted. Such structure can be a primary structure (not illustrated) of the aircraft 1. Although Figure 1 does not illustrated an outer blade 130 at a position adjacent to the upper beam 140, it is to be understood that such outer blade 130 can likewise be attached to the outer skin 110 for increased stiffness. Alternatively, the upper beam 140 is mounted to the top ends of one or more of the plurality of blades 120.

The right part of Figure 1 shows an inner skin 210 having a plurality of blades 220, 230 attached thereto. Although the inner skin 210 could have the same or similar size as the outer skin 110, manufacturing of the door 100 can be facilitated by providing a plurality of inner skin sections corresponding to the inner blades 220, 230, wherein each section extends at a predefined angle from one of the plurality of inner blades 220. In addition, providing sections of the inner skin 210 further decreases the weight of the inner skin 210 and, hence, the entire door 100. The section of the inner skin 210 along a transverse inner blade 230 can connect sections of the inner skin 210 along the longitudinal inner blades 220, hence forming a closed structure.

The outer part of the door 100 and the inner part of the door 100 are made from components arranged at a predefined angle, to one another for example, substantially orthogonal as illustrated in Figures 1 and 2, which facilitates manufacturing of each of these parts of the door 100. As can be derived from Figure 1, there is no undercut or void between parts of the door 100, such as outer skin 110, and outer blades 120, 130, as well as inner skin 210, and inner blades 220, 230.

Figure 2 schematically illustrates an aircraft door 100 assembled and completed, i.e. after a completed manufacturing process of the door 100. In this state, the plurality of inner blades 220, 230 is attached to the plurality of outer blades 120, 130, wherein a one-to-one attachment between inner and outer blades 220, 230, 120, 130 is achieved. In other words, one inner blade 220, 230 and one outer blade 120, 130 together form a web-like structure of the door 100, wherein the sections of the inner skin 210 form flanges to this web-like structure.

Figure 2 further illustrates and upper door beam 140 (or door mount) attached to a component of the door 100. For instance, the upper beam 140 can be attached to one or more blades 120, 130, 220, 230 (i.e., inner and/or outer blades 120, 130, 220, 230), to the outer skin 110 and/or to the inner skin 210. Likewise, a door mount 150 (or doorstop) can be provided in the same manner as upper beam 140. It is to be understood that other components of the door may be arranged and attached at the outer skin 110, inner skin 210, and/or blades 120, 130, 220, 230, including door kinematics components, such as latch brackets, a hinge, an X-stop, a guide fitting and the like.

Figure 2 also illustrates at least one gusset 170 arranged to span and connect two sections of the inner skin 210. Such gusset 170 can be attached to the inner skin 210 and increases stiffness, as the gusset 170 is arranged parallel to the inner skin 210. The gusset 170 can be attached to the sections of the inner skin 210 by welding or riveting or similar fasteners. Alternatively or additionally, at a position, where a gusset 170 is illustrated, the inner skin can be sized to span the space between two adjacent inner blades 220, 230. Thus, instead of a gusset 170, the inner skin 210 can perform the same functionality in form of an integrated inner skin 210 connecting two adjacent inner blades 220, 230.

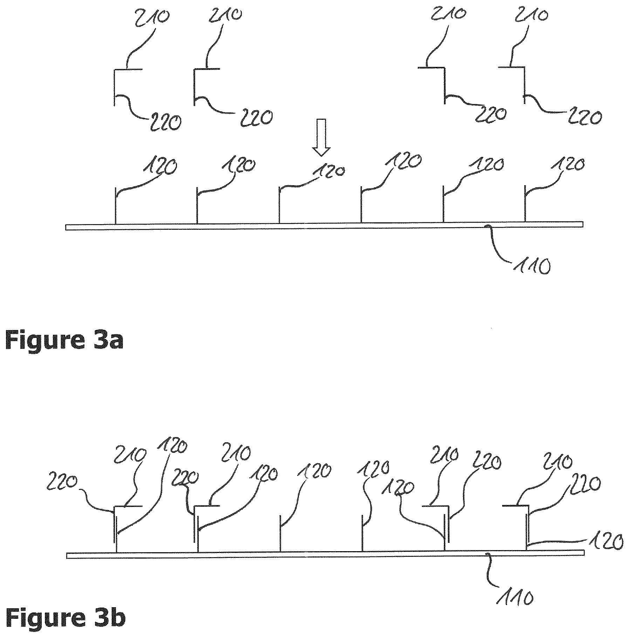

Figures 3a and 3b schematically illustrate a cross-section (in transverse direction) through an aircraft door 100 during subsequent manufacturing steps. The outer skin 110 of the door 100 is illustrated in Figures 3a and 3b as being flat. It is to be understood that in the cross-sectional direction (or width direction) of the door 100 the outer skin 110 can also have a curvature.

In correspondence with Figure 1, Figure 3a illustrates a cross-section of the outer part of the door 100, i.e. illustrates the outer skin 110 and a plurality of outer blades 120 attached thereto, as well as a cross-section of the inner part of the door 100, i.e. the inner skin 210 and a plurality of inner blades 220 attached thereto. The inner skin 210 is provided in several sections, one section for each inner blade 220.

The inner part of the door 100 is moved to the outer part of the door 100, as it is schematically illustrated by the arrow pointing downwards. Figure 3b illustrates the state in which the inner and outer parts of the door 100 are attached to one another. It is to be understood that the inner blades 220 and outer blades 120 are illustrated separate from one another for clarity reasons, specifically to illustrate an overlapping arrangement of outer and inner blades 120, 220. Once the outer and inner blades 120, 220 are attached to one another, for example, by welding or adhering or riveting or the like, the outer and inner blades 120, 220 can be considered as forming a single web-like element of the door 100.

Figure 3b illustrates an overlapping arrangement of the inner and outer blades 120, 220, where side faces of the blades 120, 220 overlap and are attached to one another. It is to be understood that at least some of the blades 120, 220 can contact one another at front faces, hence, they stand on one another.

Figures 1 to 3b further illustrate that some of the outer blades 120 may simply form frame-like structures, i.e., no inner blade 220 and inner skin 210 is attached to such outer blades 120. This allows omitting stiffening elements for the outer skin 110 in sections where no additional strength is required. For example, inner blades 220, 230 with inner skin 210 attached thereto may only be provided in a circumferential area of the door 100, where the main loads have to be transferred, particularly the main loads have to be transferred between upper beam 140 and door mounts (or doorstops) 150. Thus, the two longitudinally arranged inner blades 220 with inner skin 210 illustrated in Figure 1 are arranged on each side of the door 100 (and on each side of the window opening 160) and substantially span the entire length (top to bottom) of the door 100. Likewise, the inner blades 230 with inner skin 210 are provided around the window opening 160 as well as at the bottom of the door 100, in order to provide a window frame and increased stiffness and load transfer.

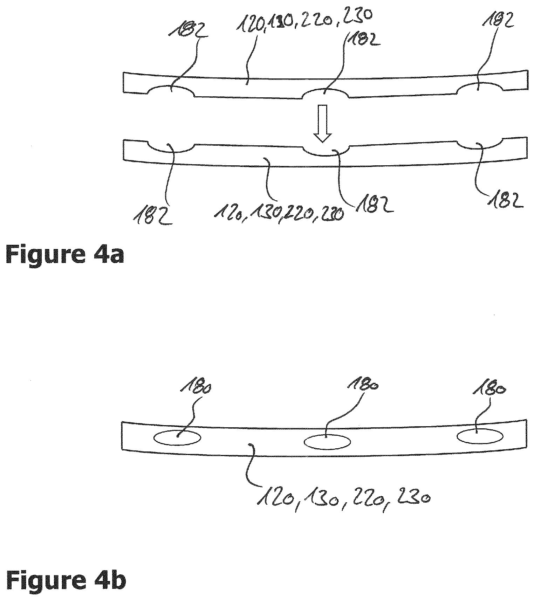

Figures 4a and 4b schematically illustrate a side views of a blade 120, 220 during subsequent manufacturing steps. As can be derived from Figure 4b illustrating the completed web-like structure, where inner and outer blades 120, 220 are connected to one another, the inner and outer blades 120, 130, 220, 230 can comprise one or more openings 180, in order to save material and, hence, weight. The opening 180 can be arranged in each of the inner and outer blades 120, 130, 220, 230, particularly, when side faces of the inner and outer blades 120, 130, 220, 230 are abutting one another when connecting the inner and outer blades 120, 130, 220, 230. Alternatively or additionally, openings 180 can be arranged in an inner blade 220, 230 or in an outer blade 120, 130.

Further alternatively or additionally, as illustrated in Figure 4a indentations 182 can be provided in each of the inner and outer blades 120, 130, 220, 230. Such indentations 182 are located along the respective blade 120, 130, 220, 230 in a corresponding manner, so that to indentations 182 together form a hole 180, when the inner and outer blades 120, 130, 220, 230 are connected to one another. Particularly, when the inner and outer blades 120, 130, 220, 230 are connected to one another with abutting front faces, the indentations 182 form a hole 180 in the finished web-like structure.

Furthermore, Figures 4a and 4b illustrate the blades 120, 130, 220, 230 as having a curvature. This corresponds to the curvature of the door 100 along a longitudinal direction (see also Figures 1 and 2).

Figure 5 schematically illustrates an aircraft 1 comprising a plurality of doors 100. Such door 100 can be a regular passenger door, cargo door or over wing door, such as an emergency door. Figures 1 and 2 exemplarily illustrate an emergency door, such as an over wing door.

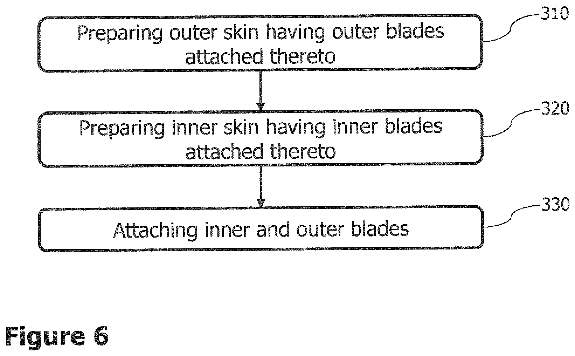

Figure 6 schematically illustrates a flow diagram representing a method of manufacturing an aircraft door 100. The method is described also with respect to Figures 1 to 4.

Specifically, the method can start in step 310 by preparing from a composite plastic material an outer skin 110 having a plurality of outer blades 120, 130 extending therefrom. The outer blades 120, 130 extent at a predefined angle from the outer skin 110. For example, the outer blades 120, 130 can be arranged substantially orthogonal to the outer skin 110.

Furthermore, in step 320 an inner skin 210 is prepared, also from a composite plastic material, having a plurality of sections and a plurality of inner blades 220, 230, wherein each inner blade 220, 230 extends at a predefined angle from one of the plurality of inner skin sections. For example, the inner blades 220, 230 can be arranged substantially orthogonal to one of the plurality of sections of the inner skin 210.

Any of the preparing step 310, 320 can comprise a hydrostatic metal membrane manufacturing technique. This allows a very precise and fast manufacturing of the outer part (i.e., outer skin 110 and outer blades 120, 130) as well as of the inner part (i.e., inner skin 210 and inner blades 220, 230).

It is to be understood that the preparing steps 310, 320 can be performed subsequent, i.e. on after the other, in any order, or at the same time. Specifically, as the outer part and inner part of the door 100 are separate parts, the preparing (i.e., manufacturing) thereof can take place independent from one another.

In a further step 330, each of the plurality of inner blades 220, 230 is attached to one of the plurality of outer blades 120, 130. Thus, each inner blade220, 230 with its section of the inner skin 210 forms an ortho-grid addition to the outer blade 120, 130, to which it is attached. In other words, the section of the inner skin 210 is arranged parallel to the outer skin 110 in the region of the outer blade 120, 130, while the inner blade 220, 230 attached to the outer blade 120, 130 are arranged at a predefined angle, e.g., substantially orthogonal, to the inner and outer skins 210, 110 and form together a (substantially orthogonal) web structure.

The attaching in step 330 can comprise welding or adhering or riveting or using other fasteners to attach the inner blade 220, 230 to the outer blade 120, 130. In a specific example, the composite plastic material is a thermoplastic, fibre reinforced composite material, and a thermoplastic welding technique, including ultrasonic welding, is employed for attachment of both blades 120, 130, 220, 230 to one another.

The attaching step 330 can comprise arranging each of the plurality of inner blades 220, 230 relative to one of the plurality of outer blades 120, 130 with a respective side face abutting one another. This overlapping of the side faces of the inner and outer blades 220, 230, 120, 130 is exemplarily illustrated in Figure 3a,b.

Alternatively, the attaching step 330 can comprise arranging each of the plurality of inner blades 220, 230 relative to one of the plurality of outer blades 120, 130 with a respective front face abutting one another. Thus, a centre axis of the inner blade 220, 230 falls onto a centre axis of the outer blade 120, 130.

It is to be understood that the attaching step 330 can also include a combination of abutting side faces of some of the blades 120, 130, 220,230 and abutting front faces of some of the blades 120, 130, 220, 230.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the invention should be limited only by the scope of the claims that follow.

## Claims

1. A door (100) for an aircraft (1), comprising:
an outer skin (110);
a plurality of outer blades (120, 130) extending from the outer skin (110) at a first predefined angle and forming a free end;
a plurality of inner blades (220, 230) forming a free end; and
an inner skin (210) extending from the plurality of inner blades (220, 230) opposite to the free end, wherein the inner skin (210) comprises a plurality of sections, each extending at a second predefined angle from one of the plurality of inner blades (220, 230),
wherein the outer skin (110), the plurality of outer blades (120, 130), the plurality of inner blades (220, 230), and the inner skin (210) are made from a composite plastic material,
wherein the number of the plurality of outer blades (120, 130) is larger than the number of the plurality of inner blades (220, 230),
wherein the plurality of inner blades (220, 230) are arranged in a circumferential area of the door (100) where the main loads have to be transferred and omitted in sections of the outer skin (110) where no additional stiffening is required, and
wherein each of the plurality of inner blades (220, 230) is attached to one of the plurality of outer blades (120, 130).

2. The door (100) of claim 1, wherein a first group of the plurality of outer blades (120, 130) extends in a first direction along the outer skin (110), and a second group of the plurality of outer blades (120, 130) extends, along the outer skin (110), in a second direction different from the first direction, and wherein, preferably, the first direction is substantially orthogonal to the second direction.

3. The door (100) of claim 1 or 2, further comprising:
a window opening (160) in the outer skin (110),
wherein one of the plurality of inner blades (220, 230) is positioned adjacent to the window opening (160) and, preferably, forms a window frame.

4. The door (100) of one of claims 1 to 3, further comprising:
an upper door beam (140),
wherein one of the plurality of outer blades (120, 130) is positioned adjacent to the upper door beam(140).

5. The door (100) of one of claims 1 to 4, further comprising:
a gusset (170) arranged to span and connect two sections of the inner skin (210), or
at least a portion of two sections of the inner skin (210) are connected to one another or are integrated with one another.

6. The door (100) of one of claims 1 to 5, wherein at least one of the plurality of outer blades (120) and the plurality of inner blades (220) comprises an opening (180), or
wherein each of one of the plurality of outer blades (120, 130) and the corresponding inner blade (220, 230) connected to the one outer blade (120, 130) has an indentation (182), so that the indentations (182) of the connected outer and inner blades (120, 130, 220, 230) together form an opening (180) in the connected blade.

7. An aircraft (1) comprising at least one door (100) of one of claims 1 to 6.

8. A method for manufacturing a composite plastic door (100) for an aircraft (1), the method comprising:
preparing (310), from a composite plastic material, an outer skin (110) having a plurality of outer blades (120, 130) extending from the outer skin (110) at a first predefined angle and forming a free end;
preparing (320) from a composite plastic material, an inner skin (210) having a plurality of sections and a plurality of inner blades (220, 230), wherein each inner blade (220, 230) extends from one of the plurality of sections at a second predefined angle forming a free end opposite to the inner skin (210); and
attaching (330) each of the plurality of inner blades (220, 230) to one of the plurality of outer blades (120, 130),
wherein the number of the plurality of outer blades (120, 130) is larger than the number of the plurality of inner blades (220, 230), and
wherein the plurality of inner blades (220, 230) are arranged in a circumferential area of the door (100) where the main loads have to be transferred and omitted in sections of the outer skin (110) where no additional stiffening is required.

9. The method of claim 8, wherein the composite plastic material is a thermoplastic, fibre reinforced composite material, and wherein the attaching (330) is performed by thermoplastic welding.

10. The method of claim 9, wherein the attaching (330) comprises arranging each of the plurality of inner blades (220) relative to one of the plurality of outer blades (120) to have a side face of one of the inner blades (220) abutting a side face of one of the outer blades (120) or to have a front face of one of the inner blades (220) abutting a front face of one of the outer blades (120), wherein the abutting faces form welding surfaces.

11. The method of one of claims 8 to 10, wherein the preparing (310, 320) of the outer skin (110) and/or the inner skin (210) comprises hydrostatic metal membrane manufacturing.

## Patentansprüche

1. Tür (100) für ein Flugzeug (1), die Folgendes umfasst:
eine Außenhaut (110);
mehrere äußere Versteifungsplatten (120, 130), die sich von der Außenhaut (110) in einem ersten vordefinierten Winkel erstrecken und ein freies Ende bilden;
mehrere innere Versteifungsplatten (220, 230), die ein freies Ende bilden; und
eine Innenhaut (210), die sich von den mehreren inneren Versteifungsplatten (220, 230) gegenüber dem freien Ende erstreckt, wobei die Innenhaut (210) mehrere Abschnitte umfasst, die sich jeweils in einem zweiten vordefinierten Winkel von einer der mehreren inneren Versteifungsplatten (220, 230) erstrecken,
wobei die Außenhaut (110), die mehreren äußeren Versteifungsplatten (120, 130), die mehreren inneren Versteifungsplatten (220, 230) und die Innenhaut (210) aus einem Verbundkunststoffmaterial hergestellt sind,
wobei die Anzahl der mehreren äußeren Versteifungsplatten (120, 130) größer als die Anzahl der mehreren inneren Versteifungsplatten (220, 230) ist,
wobei die mehreren inneren Versteifungsplatten (220, 230) in einem Umfangsbereich der Tür (100) angeordnet sind, wo die Hauptlasten übertragen werden müssen, und in Abschnitten der Außenhaut (110) weggelassen werden, wo keine zusätzliche Versteifung erforderlich ist, und
wobei jede der mehreren inneren Versteifungsplatten (220, 230) an einer der mehreren äußeren Versteifungsplatten (120, 130) befestigt ist.

2. Tür (100) nach Anspruch 1, wobei sich eine erste Gruppe der mehreren äußeren Versteifungsplatten (120, 130) in einer ersten Richtung entlang der Außenhaut (110) erstreckt und sich eine zweite Gruppe der mehreren äußeren Versteifungsplatten (120, 130) entlang der Außenhaut (110) in einer zweiten Richtung erstreckt, die sich von der ersten Richtung unterscheidet, und wobei vorzugsweise die erste Richtung im Wesentlichen orthogonal zu der zweiten Richtung ist.

3. Tür (100) nach Anspruch 1 oder 2, die ferner Folgendes umfasst:
eine Fensteröffnung (160) in der Außenhaut (110),
wobei eine der mehreren inneren Versteifungsplatten (220, 230) angrenzend an die Fensteröffnung (160) positioniert ist und vorzugsweise einen Fensterrahmen bildet.

4. Tür (100) nach einem der Ansprüche 1 bis 3, die ferner Folgendes umfasst:
einen oberen Türträger (140),
wobei eine der mehreren äußeren Versteifungsplatten (120, 130) angrenzend an den oberen Türträger (140) positioniert ist.

5. Tür (100) nach einem der Ansprüche 1 bis 4, die ferner Folgendes umfasst:
ein Versteifungselement (170), das so angeordnet ist, dass es zwei Abschnitte der Innenhaut (210) überspannt und verbindet, oder
wobei zwei Abschnitte der Innenhaut (210) in zumindest einem Teil miteinander verbunden sind oder miteinander integriert sind.

6. Tür (100) nach einem der Ansprüche 1 bis 5, wobei mindestens eine der mehreren äußeren Versteifungsplatten (120) und der mehreren inneren Versteifungsplatten (220) eine Öffnung (180) umfasst, oder
wobei jede der mehreren äußeren Versteifungsplatten (120, 130) und der entsprechenden inneren Versteifungsplatte (220, 230), die mit der einen äußeren Versteifungsplatte (120, 130) verbunden ist, eine Vertiefung (182) aufweist, so dass die Vertiefungen (182) der verbundenen äußeren und inneren Versteifungsplatten (120, 130, 220, 230) zusammen eine Öffnung (180) in der verbundenen Versteifungsplatte bilden.

7. Flugzeug (1), umfassend mindestens eine Tür (100) nach einem der Ansprüche 1 bis 6.

8. Verfahren zum Herstellen einer Verbundkunststofftür (100) für ein Flugzeug (1), wobei das Verfahren Folgendes umfasst:
Vorbereiten (310), aus einem Verbundkunststoffmaterial, einer Außenhaut (110) mit mehreren äußeren Versteifungsplatten (120, 130), die sich von der Außenhaut (110) in einem ersten vordefinierten Winkel erstrecken und ein freies Ende bilden;
Vorbereiten (320), aus einem Verbundkunststoffmaterial, einer Innenhaut (210) mit mehreren Abschnitten und mehreren inneren Versteifungsplatten (220, 230), wobei sich jede innere Versteifungsplatte (220, 230) von einem der mehreren Abschnitte in einem zweiten vordefinierten Winkel erstreckt, ein freies Ende gegenüber der Innenhaut (210) bildend; und
Befestigen (330) jeder der mehreren inneren Versteifungsplatten (220, 230) an einer der mehreren äußeren Versteifungsplatten (120, 130),
wobei die Anzahl der mehreren äußeren Versteifungsplatten (120, 130) größer als die Anzahl der mehreren inneren Versteifungsplatten (220, 230) ist, und
wobei die mehreren inneren Versteifungsplatten (220, 230) in einem Umfangsbereich der Tür (100) angeordnet sind, wo die Hauptlasten übertragen werden müssen, und in Abschnitten der Außenhaut (110) weggelassen werden, wo keine zusätzliche Versteifung erforderlich ist.

9. Verfahren nach Anspruch 8, wobei das Verbundkunststoffmaterial ein thermoplastisches, faserverstärktes Verbundmaterial ist und wobei das Befestigen (330) durch thermoplastisches Schweißen durchgeführt wird.

10. Verfahren nach Anspruch 9, wobei das Befestigen (330) Anordnen jeder der mehreren inneren Versteifungsplatten (220) relativ zu einer der mehreren äußeren Versteifungsplatten (120) umfasst, so dass eine Seitenfläche einer der inneren Versteifungsplatten (220) an eine Seitenfläche einer der äußeren Versteifungsplatten (120) anliegt oder eine Vorderfläche einer der inneren Versteifungsplatten (220) an eine Vorderfläche einer der äußeren Versteifungsplatten (120) anliegt, wobei die anliegenden Flächen Schweißflächen bilden.

11. Verfahren nach einem der Ansprüche 8 bis 10, wobei das Vorbereiten (310, 320) der Außenhaut (110) und/oder der Innenhaut (210) eine hydrostatische Metallmembranherstellung umfasst.

## Revendications

1. Porte (100) pour aéronef (1), comprenant:
un revêtement extérieur (110);
une pluralité de lames extérieures (120, 130) s'étendant depuis le revêtement extérieur (110) suivant un premier angle prédéfini et formant une extrémité libre;
une pluralité de lames intérieures (220, 230) formant une extrémité libre; et
un revêtement intérieur (210) s'étendant depuis la pluralité de lames intérieures (220, 230) à l'opposé de l'extrémité libre, le revêtement intérieur (210) comprenant une pluralité de sections, chacune s'étendant suivant un second angle prédéfini depuis l'une de la pluralité de lames intérieures (220, 230),
le revêtement extérieur (110), la pluralité de lames extérieures (120, 130), la pluralité de lames intérieures (220, 230) et le revêtement intérieur (210) étant en une matière plastique composite,
le nombre de la pluralité de lames extérieures (120, 130) étant supérieur au nombre de la pluralité de lames intérieures (220, 230),
la pluralité de lames intérieures (220, 230) étant disposées dans une zone circonférentielle de la porte (100) où les charges principales doivent être transférées et omises dans des sections du revêtement extérieur (110) où aucun renforcement supplémentaire n'est requis, et
chacune de la pluralité de lames intérieures (220, 230) étant fixée à l'une de la pluralité de lames extérieures (120, 130).

2. Porte (100) selon la revendication 1, un premier groupe de la pluralité de lames extérieures (120, 130) s'étendant dans une première direction le long du revêtement extérieur (110), et un second groupe de la pluralité de lames extérieures (120, 130) s'étendant, le long du revêtement extérieur (110), dans une seconde direction différente de la première direction, et de préférence, la première direction étant sensiblement orthogonale à la seconde direction.

3. Porte (100) selon la revendication 1 ou 2, comprenant en outre:
une ouverture de fenêtre (160) dans le revêtement extérieur (110),
l'une de la pluralité de lames intérieures (220, 230) étant positionnée adjacente à l'ouverture de fenêtre (160) et, de préférence, formant un dormant de fenêtre.

4. Porte (100) selon l'une des revendications 1 à 3, comprenant en outre:
un renfort supérieur de porte (140),
l'une de la pluralité de lames extérieures (120, 130) étant positionnée adjacente au renfort supérieur de porte (140).

5. Porte (100) selon l'une des revendications 1 à 4, comprenant en outre:
un gousset (170) conçu pour s'étendre entre et relier deux sections du revêtement intérieur (210), ou
au moins une partie de deux sections du revêtement intérieur (210) étant reliées l'une à l'autre ou étant intégrées l'une à l'autre.

6. Porte (100) selon l'une des revendications 1 à 5, au moins l'une de la pluralité de lames extérieures (120) et de la pluralité de lames intérieures (220) comprenant une ouverture (180), ou
chacune de la pluralité de lames extérieures (120, 130) et la lame intérieure (220, 230) correspondante reliée à la lame extérieure (120, 130) présentant une encoche (182), de sorte que les encoches (182) des lames extérieure et intérieure (120, 130, 220, 230) reliées forment ensemble une ouverture (180) dans la lame reliée.

7. Aéronef (1) comprenant au moins une porte (100) selon l'une des revendications 1 à 6.

8. Procédé de fabrication d'une porte (100) en matière plastique composite pour aéronef (1), le procédé comprenant:
la préparation (310), à partir d'une matière plastique composite, d'un revêtement extérieur (110) présentant une pluralité de lames extérieures (120, 130) s'étendant depuis le revêtement extérieur (110) suivant un premier angle prédéfini et formant une extrémité libre;
la préparation (320) à partir d'une matière plastique composite, d'un revêtement intérieur (210) présentant une pluralité de sections et une pluralité de lames intérieures (220, 230), chaque lame intérieure (220, 230) s'étendant depuis l'une de la pluralité de sections suivant un second angle prédéfini formant une extrémité libre opposée au revêtement intérieur (210); et
la fixation (330) de chacune de la pluralité de lames intérieures (220, 230) à l'une de la pluralité de lames extérieures (120, 130),
le nombre de la pluralité de lames extérieures (120, 130) étant plus grand que le nombre de la pluralité de lames intérieures (220, 230), et
la pluralité de lames intérieures (220, 230) étant disposées dans une zone circonférentielle de la porte (100) où les charges principales doivent être transférées et omises dans des sections du revêtement extérieur (110) où aucun renforcement supplémentaire n'est requis.

9. Procédé selon la revendication 8, la matière plastique composite étant un matériau composite thermoplastique renforcé par des fibres, et la fixation (330) étant effectuée par soudage thermoplastique.

10. Procédé selon la revendication 9, la fixation (330) comprenant l'agencement de chacune de la pluralité de lames intérieures (220) par rapport à l'une de la pluralité de lames extérieures (120) pour avoir une face latérale de l'une des lames intérieures (220) en butée contre une face latérale de l'une des lames extérieures (120) ou pour avoir une face avant de l'une des lames intérieures (220) en butée contre une face avant de l'une des lames extérieures (120), les faces en butée formant des surfaces de soudure.

11. Procédé selon l'une des revendications 8 à 10, la préparation (310, 320) du revêtement extérieur (110) et/ou du revêtement intérieur (210) comprenant la fabrication d'une membrane métallique hydrostatique.
